# EUROPEAN PATENT APPLICATION

(11) **EP 1 974 960 A1**
(43) Date of publication of application: **01.10.2008**
(21) Application number: 07706838.5
(22) Date of filing: 16.01.2007
(51) Int. Cl.: B60C 17/06

(54) **RUN-FLAT SUPPORT FOR PNEUMATIC TIRE**

(30) Priority: 20.01.2006 JP 2006012401
(71) Applicant: The Yokohama Rubber Co., Ltd., Minato-ku Tokyo 105-8685 (JP)
(72) Inventor: NAITO, Mitsuru, Hiratsuka-shi, Kanagawa 254-8601 (JP); TAKEYAMA, Hidekazu, Hiratsuka-shi, Kanagawa 254-8601 (JP)
(74) Representative: HOFFMANN EITLE
(86) International application number: PCT/JP2007/050511
(87) International publication number: WO 2007/083630

(57) **Abstract**

Provided is a run-flat support for pneumatic tire, which support is improved in durability while still achieving a lightweight. A run-flat support 1 is constituted of an annular shell 2, and elastic rings 3. In a lateral cross section of the annular shell 2, the annular shell 2 has: an outer circumferential side formed in a plurality of convex support potions 2a each bulging outward, and a concave linking portion 2b linking the convex supporting portions 2a; and a pair of right and left leg portions 2c extending radially inward respectively from the supporting portions 2a on the corresponding sides in a bifurcating manner. The elastic rings are mounted respectively on ends of both leg portions of the annular shell 2. The body of the annular shell 2 is formed of metal or ceramics, and a fiber reinforced resin layer 4 is attached at least to an inner circumferential surface of the linking portion 2b, the fiber reinforced resin layer 4 including reinforcing long fibers which arranged to intersect with the circumferential direction.

## Description

### TECHNICAL FIELD

The present invention relates to a run-flat support for pneumatic tire, and particularly to a run-flat support for pneumatic tire, which support is improved in durability while still achieving a lightweight.

### BACKGROUND ART

A lot of means using a core-type run-flat support are known as a means of enabling an emergency drive when a pneumatic tire goes flat while the vehicle is traveling. In such a means, a run-flat support is inserted into a cavity inside a pneumatic tire to support a load with the run-flat support. Of those core-type run-flat supports, expected has been practical use of a run-flat support having a body constituted of an annular shell bifurcating into a pair of right and left leg portions in a cross-section in the tire-width direction, and which is supported on a rim seat with elastic rings attached to the both leg portions, because such a run-flat support can be used for an existing wheel without adding any structural changes to the wheel.

This type of run-flat support is required to have high durability in the annular shell in run-flat driving, and also to be light in weight since the magnitude of the mass of the annular shell greatly affects the maneuverability of the vehicle due to a flywheel effect in rotation. To achieve the above, the following run-flat supports are conventionally proposed, for example. A first one is a run-flat support in which many holes are provided in a metal plate forming an annular shell to reduce the weight (refer to Patent Document 1, for example). A second one is a run-flat support in which an annular shell is formed of a thermosetting resin reinforced by carbon fibers (refer to Patent Document 2, for example). Lastly, a third one is a run-flat support in which an annular shell is formed in a sandwich structure having a resin layer in the middle and metal layers stacked on the outer and inner sides of the resin layer (refer to Patent Document 3, for example).

However, the first proposal has a durability problem since many holes provided in the metal plate causes cracks in run-flat driving; the second proposal has a problem that the annular shell increases the cost; and the third proposal has a problem that there is a limit to the reduction in weight of the annular shell since metals are used on the both sides. Hence, further improvement remains to be achieved for any of the above proposals.
[Patent Document 1] Japanese patent application Kokai publication No. 2004-51088
[Patent Document 2] Japanese patent application Kokai publication No. 2004-58865
[Patent Document 3] Japanese patent application Kokai publication No. 2004-148935

### DISCLOSURE OF THE INVENTION

### Problems to be solved by the Invention

To solve the above-described problems, an object of the invention is to provide a run-flat support for pneumatic tire, which support is improved in durability while still achieving a light weight.

### Means for Solving the Problems

To achieve the above-described object, a run-flat support for pneumatic tire is constituted of an annular shell, and elastic rings. The annular shell has, in a lateral cross section including a rotational axis: an outer circumferential side formed in a plurality of convex support potions each bulging outward, and a concave linking portion linking the convex supporting portions; and an inner circumferential side formed in a pair of right and left leg portions extending radially inward respectively from the supporting portions on the corresponding sides in a bifurcating manner. The elastic rings are mounted respectively on ends of both leg portions of the annular shell. The body of the annular shell is formed of metal or ceramics, and a fiber reinforced resin layer is attached at least to an inner circumferential surface of the linking portion, the reinforced resin layer including reinforcing long fibers which are arranged to intersect with the circumferential direction.

### Effects of the Invention

In this run-flat support for pneumatic tire, the body of the annular shell is formed of metal or ceramics, and fiber reinforced resin layers are attached to an inner circumferential surface of the linking portion where a highest tensile stress in the annular shell occurs in run-flat driving, the fiber reinforced resin layers having reinforcing long fibers arranged to intersect with the circumferential direction. Accordingly, in this run-flat support, it is possible to improve the durability by preventing the annular shell from being damaged in run-flat driving, while reducing the weight by making the thickness of a metal or ceramic plate forming the body of the annular shell as thin as possible.

### BRIEF DESCRIPTION OF THE DRAWINGS

[Fig. 1] Fig. 1 is a cross-sectional view of a tire and wheel assembly, showing a state in which a run-flat support for pneumatic tire of an embodiment of the invention is mounted on a rim.
[Fig. 2] Fig. 2 is a partial perspective view of the run-flat support taken out from the tire and wheel assembly of Fig. 1.
[Fig. 3] Fig. 3 is a partial plan view showing a fiber reinforced resin layer to be attached to a surface of an annular shell.

### DESCRIPTION OF SYMBOLS

- 1: run-flat support for pneumatic tire
- 2: annular shell
- 2a: supporting portion
- 2b: clinking portion
- 2c: leg portion
- 3: elastic ring
- 4: fiber reinforced resin layer
- f: reinforcing long fiber
- g: resin
- T: pneumatic tire
- Rm: rim

### BEST MODE FOR CARRYING OUT THE INVENTION

A configuration of the invention will be described in detail below with reference to the accompanying drawings.

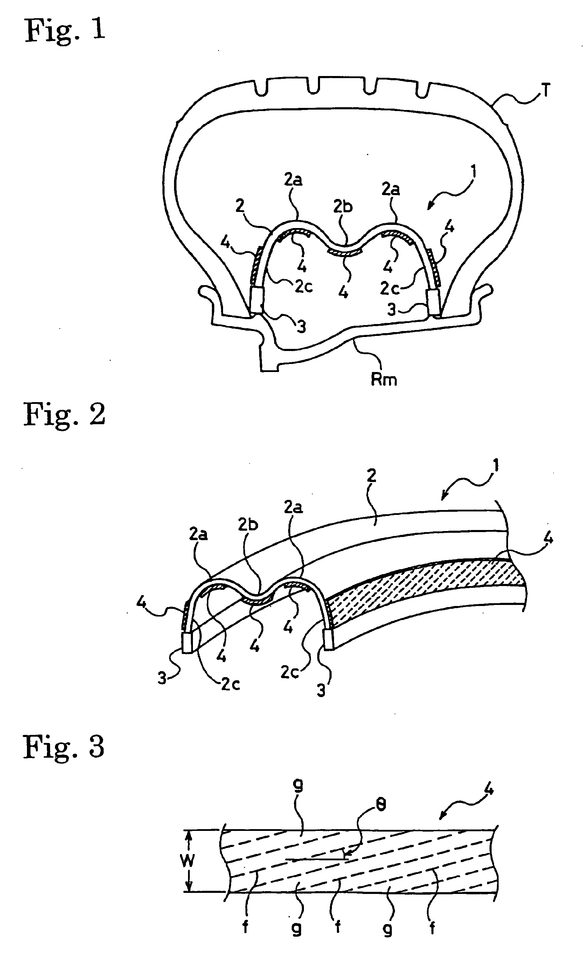

Fig. 1 is a cross-sectional view of a tire and wheel assembly showing a state in which a run-flat support for pneumatic tire of an embodiment of the invention is mounted on a rim; Fig. 2 is a partial perspective view of the run-flat support taken out from the tire and wheel assembly of Fig. 1; and Fig. 3 is a partial plan view showing a fiber reinforced resin layer to be attached to a surface of an annular shell.

In Fig. 1, a run-flat support for pneumatic tire 1 is constituted of an annular shell 2 and elastic rings 3, 3, so that the elastic rings 3, 3 are supported on a rim Rm. The annular shell 2 is constituted of, in a lateral cross section including the rotational axis: a plurality of (two in the drawings) convex support potions 2a, 2a, each bulging outward, and a concave linking portion 2b linking the convex supporting portions 2a, 2a, the potions 2a, 2a, and 2b being formed on the outer circumference side; and a pair of right and left leg portions 2c, 2c extending radially inward from both sides of the supporting portions 2a, 2a in a bifurcating manner. The elastic rings 3, 3 are respectively attached to the ends of leg portions 2c, 2c of the annular shell 2.

The body of the annular shell 2 is formed of: steel formed of high-tensile steel, stainless steel, or the like; lightweight metal formed of aluminum, magnesium, or the like; or ceramics formed of a sintered material such as aluminum oxide, silicon oxide, or chromium oxide. As shown in Fig. 3, a fiber reinforced resin layer 4 is attached at least to an inner circumferential surface, of the surface of the annular shell 2, of the linking portion 2b having reinforcing long fibers thereof arranged to intersect with the circumferential direction at an angle of θ. The fiber reinforced resin layer 4 is constituted of a compound body in which reinforcing long fibers f formed of one of, or a combination of, carbon fibers, Kevler fibers, glass fibers, and the like, impregnated with thermo-setting or thermoplastic resin g.

Thus, it is possible to improve the durability of the run-flat support by preventing the annular shell 2 from being damaged by reinforcing, with the fiber reinforced resin layer 4 with orientation, an inner circumferential surface of the linking portion where a highest tensile stress occurs in run-flat driving while keeping the run-flat support light in weight by making the thickness of a metallic plate or a ceramic plate constituting the body of the annular shell 2, as small as possible.

In the invention, the fiber reinforced resin layers 4 may be attached also to inner circumferential surfaces of the supporting portions 2a, 2a as shown in Fig. 1. By attaching the fiber reinforced resin layers 4 to the inner circumferential surfaces of the supporting portions 2a, 2a, subjected to tensile stress in run-flat driving, the durability of the run-flat support 1 can be further improved.

An intersection angle at which reinforcing long fibers f, constituting the fiber reinforced resin layers 4 to be attached to the inner circumferential surfaces of the linking portion 2b and the supporting portions 2a, 2a, intersect with the circumferential direction may be set in the range of 45° to 90°, and the angle is preferably set in the range of 75° to 90°. Thus, the durability of the run-flat support 1 in ran-flat driving can be more efficiently improved. When the intersection angle θ is less than 45°, the annular shell 2 may lack in reinforcement effect, so that an effect for improving the durability of the run-flat support 1 to desired one cannot be obtained.

Further, the fiber reinforced resin layers 4 may be attached also to outer circumferential surfaces of the pair of right and left leg portions 2c, 2c. Thus, in the assembling of the run-flat support 1 onto the rim Rm, the both leg portions 2c, 2c of the annular shell 2 can be reinforced by the fiber reinforced resin layers 4 against tensile stress applied to the outer circumferential surfaces of the both leg portions 2c, 2c of the annular shell 2. Accordingly, the durability of the run-flat support 1 can be even more securely improved.

An intersection angle at which reinforcing long fibers f, constituting the fiber reinforced resin layers 4 to be attached to the outer circumferential surfaces of the above-described leg portions 2c, 2c, intersect with the circumferential direction may be set in the range of 30° to 60°, and the angle is preferably set in the range of 40° to 50°. Thus, the durability of the run-flat support 1 in the assembling of the run-flat support 1 onto the rim Rm can be more efficiently improved. When the intersection angle θ is less than 30°, it becomes difficult to retain strength against a force exerted by the elastic rings 3, 3 and applied in the rotational axis of the tire, so that the durability of the run-flat support 1 is reduced. On the other hand, when the intersection angle θ exceeds 60°, it becomes difficult to retain strength against a circumferential force applied to the both leg portions 2c, 2c of the annular shell 2 in run-flat driving, so that the durability of the run-flat support 1 is reduced.

Further, the widths W of the fiber reinforced resin layers 4 to be attached to the inner circumferential surfaces of the linking portion 2b and the supporting portions 2a, 2a, and to the outer circumferential surfaces of the leg portions 2c, 2c are each set depending on the size of the annular shell 2 which is determined depending on the size of a pneumatic tire T. However, normally, by considering the balance of lightweight and durability, the widths W are preferably set to be 1/8 to 1/4 of the entire width of the annular shell 2 when the annular shell 2 is developed into a plane.

In the embodiment shown in Fig. 1, description has been given to a case in which the fiber reinforced resin layers 4 are attached to the inner circumferential surfaces of the linking portion 2b and the supporting portions 2a, 2a, and to the outer circumferential surfaces of the leg portions 2c, 2c, of the annular shell 2. However, regions on which the fiber reinforced resin layers 4 are disposed are not limited to those described above, but the regions to which the fiber reinforced resin layers 4 are attached can be enlarged within a limit for suppressing sacrifice due to reduction in weight.

It is preferable that the fiber reinforced resin layers 4 be each constituted of a plurality of laminated bodies in which the direction of the reinforcing long fibers f in a lamination layer intersects with that in another lamination layer. Thus, the annular shell 2 can be more efficiently prevented from being damaged. Even in this case, it is necessary to pay attention to sacrifice due to reduction in weight.

It is preferable that the reinforcing long fibers f are formed of at least one kind selected from carbon fibers, glass fibers, and aramid fibers. The form of the reinforcing long fibers f is not particularly limited, and may be of monofilament, or of cords twisted together.

As shown in Fig. 1, after the above-described run-flat support 1 is assembled into the cavity inside the pneumatic tire T, the elastic rings 3, 3 attached to the ends of the both leg portions 2c, 2c of the annular shell 2 are mounted on the rim Rm, thus constituting the tire and wheel assembly.

As described above, the run-flat support for pneumatic tire of the invention is to improve the durability of the run-flat support while still achieving a lightweight, by forming the body of the annular shell of metal or ceramics, and by adhering the fiber reinforced resin layer at least to the inner circumferential surface of the linking portion, the fiber reinforced resin layer having reinforcing long fibers arranged to intersect with the circumferential direction. Moreover, the run-flat support for pneumatic tire of the invention produces an excellent effect while having a simple configuration. Accordingly, this can be widely used as a run-flat support for pneumatic tires.

## Claims

1. A run-flat support for pneumatic tire, comprising:
an annular shell; and
elastic rings, wherein
the annular shell has, in a lateral cross section including a rotational axis: an outer circumferential side formed in a plurality of convex supporting portions each bulging outward, and a concave linking portion linking the supporting portions; and an inner circumferential side formed in a pair of right and left leg portions extending radially inward respectively from the supporting portions on the corresponding sides in a bifurcating manner,
the elastic rings are mounted respectively on ends of both leg portions of the annular shell,
the body of the annular shell is formed of metal or ceramics, and
a fiber reinforced resin layer is attached at least to an inner circumferential surface of the linking portion, the reinforced resin layer including reinforcing long fibers which are arranged to intersect with the circumferential direction.

2. The run-flat support for pneumatic tire according to claim 1, wherein the fiber reinforced resin layer is attached to an inner circumferential surface of each of the supporting portions.

3. The run-flat support for pneumatic tire according to one of claims 1 and 2, wherein an angle at which each reinforcing long fiber intersects with the circumferential direction is in a range of 45° to 90°.

4. The run-flat support for pneumatic tire according to any one of claims 1 to 3, wherein the fiber reinforced resin layer is attached to an outer circumferential surface of each of the pair of right and left leg portions.

5. The run-flat support for pneumatic tire according to claim 4, wherein an angle at which each reinforcing long fiber in the fiber reinforced resin layer which is attached to the outer circumferential surface of each of the pair of right and left leg portions intersects with the circumferential direction is in a range of 30° to 60°.

6. The run-flat support for pneumatic tire according to any one of claims 1 to 5, wherein the fiber reinforced resin layer is constituted of a plurality of laminated bodies in which the reinforcing long fibers in a lamination layer intersect with reinforcing long fibers in another lamination layer.

7. The run-flat support for pneumatic tire according to any one of claims 1 to 6, wherein each reinforcing long fiber is formed of at least one kind selected from the group consisting of a carbon fiber, a glass fiber, and an aramid fiber.

8. A tire and wheel assembly formed by: installing the run-flat support according to any one of claims 1 to 7 in a cavity of a pneumatic tire; and then mounting the pneumatic tire with the run-flat support on a rim of a wheel.
